# EUROPEAN PATENT APPLICATION

(11) **EP 4 525 553 A1**
(43) Date of publication of application: **19.03.2025**
(21) Application number: 22941152.5
(22) Date of filing: 12.05.2022
(51) Int. Cl.: H04W 84/12

(54) **COMMUNICATION METHOD AND APPARATUS, AND ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/092533
(87) International publication number: WO 2023/216196

(57) **Abstract**

The embodiments of the present disclosure relate to the technical field of mobile communication, and provide a communication method and apparatus, an electronic device and a storage medium, the communication method being applied to an access point device AP; the method comprises: determining a target radio frame; wherein, the target radio frame comprising a first identifier bit; the first identifier bit indicating whether a sensing response end can send a sensing measurement to establish a termination frame; and sending the target radio frame. The embodiments of the present disclosure provide a method for standardizing sensing response end behavior so as to satisfy WLAN sensing requirements.

## Description

### TECHNICAL FIELD

The embodiments of the disclosure relates to the field of mobile communication technology, in particular to a communication method, a communication apparatus, an electronic device and a storage medium.

### BACKGROUND

With the rapid development of mobile communication technology, the wireless fidelity (Wi-Fi) technology has made great progress in transmission rate and throughput. Now, the contents studied by the Wi-Fi technology includes such as bandwidth transmission of 320MHz, and aggregation and coordination of multiple frequency bands, main application scenarios of which include video transmission, augmented reality (AR), virtual reality (VR), or other situations.

In detail, the "aggregation and coordination of multiple frequency bands" means that devices communicate with each other under frequency bands of 2.4GHz, 5.8GHz, 6GHz and other frequency bands at the same time. For the scenario where devices communicate with each other under multiple frequency bands at the same time, a new media access control (MAC) mechanism needs to be defined for management. In addition, low-latency transmission is expected to be supported by the aggregation and coordination of multiple frequency bands.

The currently studied Wi-Fi technology may support a wireless local area network (WLAN) sensing technology at application scenarios such as location discovery, proximity detection, and presence detection in dense environments (e.g., home environment or enterprise environment). In a WLAN sensing termination procedure, one or more sensing measurement setups may be terminated. A sensing initiator (or a sensing responder) may initiate termination of one or more sensing measurement setups by transmitting a sensing measurement setup termination frame to a sensing responder (or a sensing initiator). The sensing measurement may be established between each sensing initiator and a plurality of sensing responders. If a plurality of sensing responders send the sensing measurement setup termination frames, the sensing initiator needs to maintain each of the sensing measurement setup termination frames, which occupies the cache of the sensing initiator and makes the operation of the sensing initiator more complex. Therefore, it is necessary to provide a way to standardize the behavior of the sensing responder to meet the requirements of WLAN sensing.

### SUMMARY

Embodiments of the disclosure provide a communication method, a communication apparatus, an electronic device and a storage medium, to provide a way to standardize the behavior of a sensing responder to meet the requirements of WLAN sensing.

According to a first aspect of embodiments of the disclosure, a communication method is provided. The method is applied to an access point (AP). The method includes:
determining a target radio frame, in which the target radio frame includes a first identification bit, and the first identification bit indicates whether a sensing responder is allowed to send a sensing measurement setup termination frame; and
sending the target radio frame.

According to a second aspect of embodiments of the disclosure, a communication method is provided. The method is applied to a sensing responder. The method includes:
receiving a target radio frame, in which the target radio frame includes a first identification bit, and the first identification bit indicates whether the sensing responder is allowed to send a sensing measurement setup termination frame.

According to a third aspect of embodiments of the disclosure, an electronic device is provided. In a case where the electronic device is an AP, the electronic device includes:
a determining module, configured to determine a target radio frame, in which the target radio frame includes a first identification bit, and the first identification bit indicates whether a sensing responder is allowed to send a sensing measurement setup termination frame; and
a sending module, configured to send the target radio frame.

According to a fourth aspect of embodiments of the disclosure, an electronic device is provided. In a case where the electronic device is a sensing responder, the electronic device includes:
a receiving module, configured to receive a target radio frame, in which the target radio frame includes a first identification bit, and the first identification bit indicates whether the sensing responder is allowed to send a sensing measurement setup termination frame.

According to a fifth aspect of embodiments of the disclosure, a communication apparatus is provided. The communication apparatus is applied to an AP. The apparatus includes:
a radio frame determining module, configured to determine a target radio frame, in which the target radio frame includes a first identification bit, and the first identification bit indicates whether a sensing responder is allowed to send a sensing measurement setup termination frame; and
a radio frame sending module, configured to send the target radio frame.

According to a sixth aspect of embodiments of the disclosure, a communication apparatus is provided. The communication apparatus is applied to a sensing responder. The apparatus includes:
a radio frame receiving module, configured to receive a target radio frame, in which the target radio frame includes a first identification bit, and the first identification bit indicates whether the sensing responder is allowed to send a sensing measurement setup termination frame.

According to a seventh aspect of embodiments of the disclosure, an electronic device is provided. The electronic device includes: a memory, a processor and a computer program stored in the memory and executable by the processor. When the program is executed by the processor, one or more methods disclosed in the embodiments of the disclosure are implemented.

According to an eighth aspect of embodiments of the disclosure, a computer-readable storage medium having a computer program stored thereon is provided. When the program is executed by a processor, one or more methods disclosed in the embodiments of the disclosure are implemented.

In the embodiments of the disclosure, a target radio frame is determined and then sent. The target radio frame includes a first identification bit, and the first identification bit indicates whether a sensing responder is allowed to send a sensing measurement setup termination frame. The target radio frame indicates whether a sensing responder is allowed to send a sensing measurement setup termination frame for the purpose of standardizing the behavior of the sensing responder.

Additional aspects and advantages of embodiments of disclosure will be given in part in the following descriptions, become apparent in part from the following descriptions, or be learned from the practice of the embodiments of the disclosure.

### BRIEF DESCRIPTION OF THE DRAWINGS

In order to clearly illustrate technical solutions of embodiments of the disclosure, a brief description of drawings used in the embodiments of the disclosure is given below. Obviously, the drawings in the following descriptions are only part of the embodiments of the disclosure, and for those skilled in the art, other drawings may be obtained according to these drawings without inventive work.
FIG. 1 is a flowchart of a communication method according to an embodiment of the disclosure.
FIG. 2 is a schematic diagram of a first example of an embodiment of the disclosure.
FIG. 3 is another schematic diagram of a first example of an embodiment of the disclosure.
FIG. 4 is yet another schematic diagram of a first example of an embodiment of the disclosure.
FIG. 5 is another flowchart of a communication method of an embodiment of the disclosure.
FIG. 6 is yet another flowchart of a communication method of an embodiment of the disclosure.
FIG. 7 is a further flowchart of a communication method of an embodiment of the disclosure.
FIG. 8 is a schematic diagram of an electronic device of an embodiment of the disclosure.
FIG. 9 is another schematic diagram of an electronic device of an embodiment of the disclosure.
FIG. 10 is yet another schematic diagram of an electronic device of an embodiment of the disclosure.

### DETAILED DESCRIPTION

In the embodiments of the disclosure, the term "and/or" describes a relation of associated objects, which indicates three relations, for example, "A and/or B" indicates that A exists alone, A and B both exist, and B exists alone. The character "/" generally indicates that the associated objects prior to and after the character "/" is in an "or" relation.

The term "a plurality of" in the embodiments of the disclosure refers to two or more, which is the similar for other quantifiers.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and the appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "while" or "in response to determining".

The technical solutions in the embodiments of the disclosure will be described clearly and completely below in combination with the accompanying drawings in the embodiments of the disclosure. Clearly, the described embodiments are only a part of the embodiments of the disclosure, and not all of the embodiments. Based on the embodiments of the disclosure, other embodiments obtained by those skilled in the art without inventive works all fall within the scope of protection of the disclosure.

Embodiments of the disclosure provide a communication method, a communication apparatus, an electronic device and a storage medium, to provide a way to standardize the behavior of a sensing responder to meet the requirements of wireless local area network (WLAN) sensing.

The methods and the apparatus are based on the same application concepts, and the methods and the apparatus solve problems according to similar principles, thus the implementations of the method and the apparatus may refer to each other, and repetition will not be repeated herein.

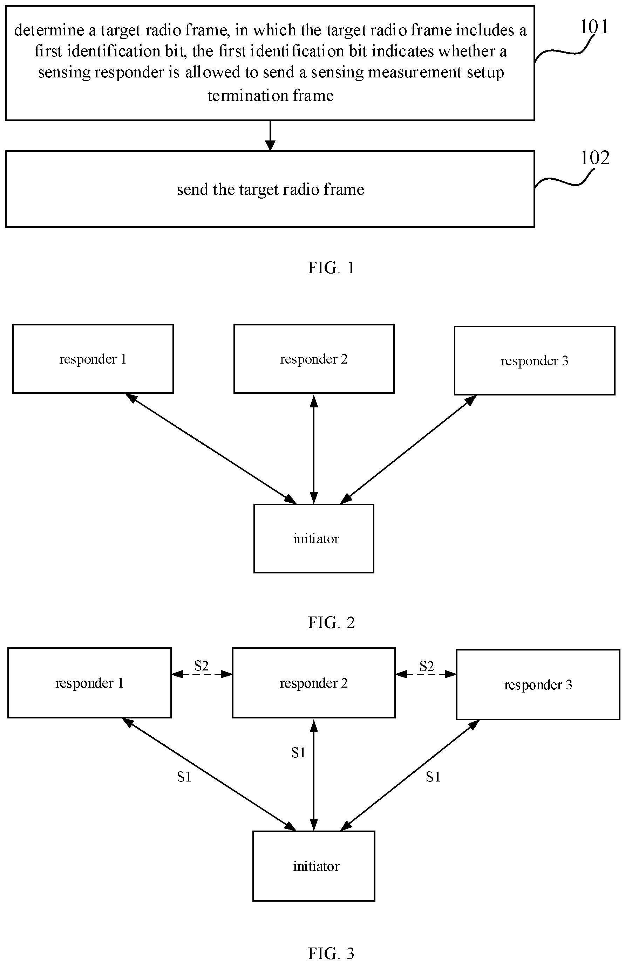

As illustrated in FIG. 1, a communication method is provided according to the embodiments of the disclosure. Optionally, the method may be applied to a network device such as an access point (AP). The AP may be a sensing initiator or a sensing by proxy (SBP) responder.

The method includes the following steps.

At step 101, a target radio frame is determined, in which the target radio frame includes a first identification bit, and the first identification bit indicates whether a sensing responder is allowed to send a sensing measurement setup termination frame.

As an example, with reference to FIG. 2 to FIG. 4, an architecture of the WLAN sensing and a procedure of the WLAN sensing applied to the communication method provided in the embodiments of the disclosure are first introduced.

FIG. 2 illustrates a schematic diagram of an architecture of a WLAN sensing (procedure). A sensing initiator (or initiator) initiates the WLAN sensing (or initiates a WLAN sensing session), and a plurality of sensing responders (or sensing receivers) or responders may respond to the WLAN sensing, such as a sensing responder 1, a sensing responder 2, and a sensing responder 3 in FIG. 2. When the sensing initiator initiates the WLAN sensing, a plurality of associated or unassociated sensing responders of the WLAN sensing may respond.

In FIG. 3, the sensing initiator communicates with the sensing responder via a communication connection, e.g., via a communication connection S1, and the sensing responders communicate with each other via a communication connection S2.

Each of the sensing initiator may be a client, and each of the sensing responder (in this example, i.e., the sensing responder 1 to the sensing responder 3) may be a station (STA) or an AP. In addition, the STA and AP may act as a plurality of roles in the WLAN sensing procedure. For example, during the WLAN sensing procedure, the STA may also act as a sensing initiator. The sensing initiator may be a sensing transmitter, a sensing receiver, or both, or neither. During the WLAN sensing procedure, the sensing responder may be a sensing transmitter, a sensing receiver, or both.

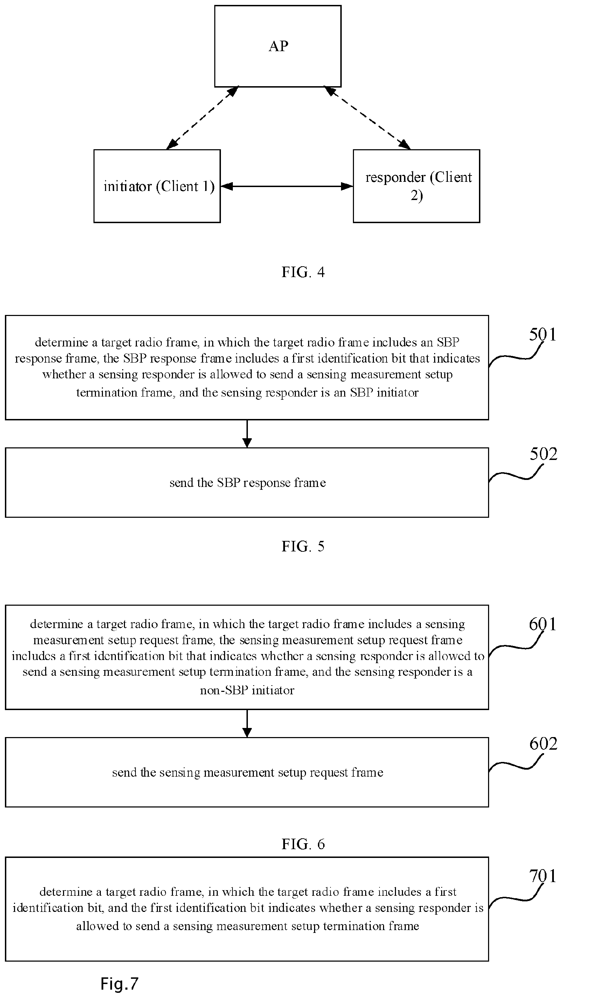

In another architecture, as shown in FIG. 4, the sensing initiator and the sensing responder may both be clients, and the sensing initiator and the sensing responder may communicate with each other by connecting to the same AP. In FIG. 4, Client 1 is an AP, and Client 2 is a sensing responder.

In a WLAN sensing termination procedure, one or more sensing measurement setups may be terminated. The sensing responder may terminate one or more sensing measurement setups by sending the sensing measurement setup termination frame. The sensing measurement may be established between each AP and a plurality of sensing responders. If a plurality of sensing responders send the sensing measurement setup termination frames, the AP needs to maintain each of the sensing measurement setup termination frames, which occupies the cache of the AP and makes the operation of the AP more complex. In the embodiment of the disclosure, the AP carries the first identification bit in the target radio frame, and indicates whether the sensing responder is allowed to send the sensing measurement setup termination frame through the first identification bit. For example, in triggered based sounding (TB) conventional scenarios (i.e., conventional scenarios other than SBP scenarios), the sensing responder is allowed to send the sensing measurement setup termination frame to initiate the WLAN sensing termination procedure.

However, in the SBP scenarios, the AP proxy SBP initiator performs the sensing measurement. If the sensing responder is not an SBP initiator, the sensing responder is not allowed to send the sensing measurement setup termination frame. In detail, in the SBP scenarios, if a non-SBP initiator sends the sensing measurement setup termination frame, the sensing measurement setup termination frame may trigger a SBP measurement termination. Under normal circumstances, the SBP measurement termination procedure shall be completed after the SBP responder (AP) sends the last SBP report frame, or after the SBP initiator or the SBP responder sends an SBP termination frame.

However, if the sensing measurement setup termination frame is sent, the SBP measurement termination may be triggered by the sensing measurement setup termination frame, resulting in an abnormal SBP termination process. Therefore, in the embodiment of the disclosure, the first identification bit is configured to indicate whether the sensing responder is allowed send the sensing measurement setup termination frame.

At step 102, the target radio frame is sent.

Optionally, in the TB conventional scenarios, the target radio frame may be a sensing measurement setup request frame. The AP indicates whether the sensing responder is allowed to send the sensing measurement setup termination frame through the sensing measurement setup request frame. In the SBP scenarios, the target radio frame may be an SBP response frame. The AP indicates whether the sensing responder is allowed to send the sensing measurement setup termination frame through the response frame.

In the embodiment of the disclosure, the target radio frame is determined and then sent. The target radio frame includes the first identification bit, and the first identification bit indicates whether the sensing responder is allowed to send the sensing measurement setup termination frame. Whether the sensing responder is allowed to send the sensing measurement setup termination frame is indicated through the target radio frame, to standardize the behavior of the sensing responder.

A communication method is further provided according to the embodiments of the disclosure. Optionally, the method may be applied to a network device, such as an AP. The AP may be a sensing initiator or an SBP responder. The method may include the following steps.

A target radio frame is determined, in which the target radio frame includes a first identification bit, and the first identification bit indicates whether a sensing responder is allowed to send a sensing measurement setup termination frame.

The first identification bit includes a measurement setup identification (MSID).

If a parameter value of the first identification bit is within a first value range, the first identification bit indicates that the sensing responder is allowed to send the sensing measurement setup termination frame. For example, the first value range may be from 0000 to 1000.

If a parameter value of the first identification bit being within a second value range, the first identification bit indicates that the sensing responder is not allowed to send the sensing measurement setup termination frame. For example, the second value range may be from 1001 to 1111.

The target radio frame is sent, so that the sensing responder may determine whether it is allowed to send the sensing measurement setup termination frame according to the value range of the MSID allocated by the AP to the sensing responder.

A communication method is further provided according to the embodiments of the disclosure. Optionally, the method may be applied to a network device, such as an AP. The AP may be a sensing initiator or an SBP responder. The method may include the following steps.

A target radio frame is determined, in which the target radio frame includes a first identification bit, and the first identification bit indicates whether a sensing responder is allowed to send a sensing measurement setup termination frame.

If a parameter value of the first identification bit is equal to a first parameter value, the first identification bit indicates that the sensing responder is allowed to send the sensing measurement setup termination frame. For example, the first parameter value is 1, which identifies that the sensing responder is allowed to send the sensing measurement setup termination frame.

If a parameter value of the first identification bit is equal to a second parameter value, the first identification bit indicates that the sensing responder is not allowed to send the sensing measurement setup termination frame. For example, if the first parameter value is 0, which identifies that the sensing responder is allowed to send the sensing measurement setup termination frame.

The target radio frame is sent, so that the sensing responder may determine whether it is allowed to send the sensing measurement setup termination frame according to the parameter value of the first identification bit allocated by the AP to the sensing responder.

A communication method is further provided according to the embodiments of the disclosure. Optionally, the method may be applied to a network device, such as an AP. The AP may be a sensing initiator or an SBP responder. The method may include the following steps.

A target radio frame is determined, in which the target radio frame includes a first identification bit, and the first identification bit indicates whether a sensing responder is allowed to send a sensing measurement setup termination frame.

On the one hand, in SBP scenarios, in a case where the sensing responder is an SBP initiator, the first identification bit indicates that the sensing responder is allowed to send the sensing measurement setup termination frame. Under normal circumstances, an SBP measurement termination procedure shall be completed after the SBP responder (AP) sends the last SBP report frame, or after the SBP initiator or the SBP responder sends an SBP termination frame. If the sensing responder is the SBP initiator, the sensing responder is allowed to send the sensing measurement setup termination frame as the SBP termination frame to terminate an SBP measurement procedure.

Correspondingly, in a case where the sensing responder is not an SBP initiator and a sensing measurement procedure corresponding to the target radio frame is an SBP sensing measurement, the first identification bit indicates that the sensing responder is not allowed to send the sensing measurement setup termination frame, to avoid causing an abnormal SBP termination procedure when the SBP measurement termination is triggered by the sent sensing measurement setup termination frame.

On the other hand, in TB conventional scenarios, in a case where the sensing responder is not an SBP initiator and a sensing measurement procedure corresponding to the target radio frame is not an SBP sensing measurement, the first identification bit indicates that the sensing responder is allowed to send the sensing measurement setup termination frame to initiate a WLAN sensing termination procedure.

The target radio frame is sent.

As illustrated in FIG. 5, a communication method is further provided according to the embodiments of the disclosure. Optionally, the method may be applied to a network device, such as an AP. The AP may be a sensing initiator or an SBP responder. The method may include the following steps.

At step 501, a target radio frame is determined, in which the target radio frame includes an SBP response frame, the SBP response frame includes a first identification bit that indicates whether a sensing responder is allowed to send a sensing measurement setup termination frame, and the sensing responder is an SBP initiator.

At step 502, the SBP response frame is sent.

During an SBP sensing measurement setup, for example, after the AP receives an SBP sensing measurement request frame sent by the SBP initiator, the AP configures the first identification bit, e.g., a MSID, for the SBP initiator in an SBP response frame. The AP may also allocate to other sensing responders (which are not the SBP initiators) that participates in the subsequent sensing measurement.

As illustrated in FIG. 6, a communication method is further provided according to the embodiments of the disclosure. Optionally, the method may be applied to a network device, such as an AP. The AP may be a sensing initiator or an SBP responder. The method may include the following steps.

At step 601, a target radio frame is determined, in which the target radio frame includes a sensing measurement setup request frame, the sensing measurement setup request frame includes a first identification bit that indicates whether a sensing responder is allowed to send a sensing measurement setup termination frame, and the sensing responder is not an SBP initiator.

At step 602, the sensing measurement setup request frame is sent.

In conventional TB scenarios, the AP indicates that the sensing responder is allowed to send the sensing measurement setup termination frame through the sensing measurement setup request frame.

However, in SBP scenarios, after the AP initiates a sensing measurement setup according to the requirements of the SBP initiator, the AP sends the sensing measurement setup request frame to other sensing responders, which are not the SBP initiators, during the sensing measurement setup. The request frame includes an indication bit to identify that an STA is participating in an SBP sensing measurement. In this case, non-SBP initiators do not need to send the sensing measurement setup termination frame to terminate the sensing measurement procedure, but need to wait for the sensing measurement setup termination frame sent by the SBP responder (AP).

In the embodiment of the disclosure, the target radio frame is determined and then sent. The target radio frame includes the first identification bit, and the first identification bit indicates whether the sensing responder is allowed to send the sensing measurement setup termination frame. Whether the sensing responder is allowed to send the sensing measurement setup termination frame is indicated through the target radio frame, to standardize the behavior of the sensing responder.

As illustrated in FIG. 7, a communication method is further provided according to the embodiments of the disclosure. Optionally, the method may be applied to a network device, such as a sensing responder. The sensing responder may be an AP or an STA. The method may include the following steps.

At step 701, a target radio frame is received, in which the target radio frame includes a first identification bit, and the first identification bit indicates whether a sensing responder is allowed to send a sensing measurement setup termination frame.

An architecture of the WLAN sensing and a procedure of the WLAN sensing applied to the communication method provided in the embodiment of the disclosure may refer to the aforementioned first example and are not repeated herein.

In a WLAN sensing termination procedure, one or more sensing measurement setups may be terminated. The sensing responder may terminate one or more sensing measurement setups by sending the sensing measurement setup termination frames. The sensing measurement may be established between each AP and a plurality of sensing responders. If a plurality of sensing responders send the sensing measurement setup termination frames, the AP needs to maintain each of the sensing measurement setup termination frames, which occupies the cache of the AP and makes the operation of the AP more complex. In the embodiment of the disclosure, the sensing responder receives the target radio frame and obtains the first identification bit carried in the target radio frame, and determines whether it is allowed to send the sensing measurement setup termination frame according to the first identification bit. For example, in TB conventional scenarios (i.e., conventional scenarios other than SBP scenarios), the sensing responder is allowed to send the sensing measurement setup termination frame to initiate the WLAN sensing termination procedure.

However, in the SBP scenarios, the AP proxy SBP initiator performs the sensing measurement. If the sensing responder is not an SBP initiator, the sensing responder is not allowed to send a sensing measurement setup termination frame. In detail, in the SBP scenario, if a non-SBP initiator sends the sensing measurement setup termination frame, the sensing measurement setup termination frame may trigger a SBP measurement termination. Under normal circumstances, the SBP measurement termination procedure shall be completed after the SBP responder (AP) sends the last SBP report frame, or after the SBP initiator or the SBP responder sends an SBP termination frame.

However, if the sensing measurement setup termination frame is sent, the SBP measurement termination may be triggered by the sensing measurement setup termination frame, resulting in an abnormal SBP termination process. Therefore, in the embodiment of the disclosure, the first identification bit is configured to indicate whether the sensing responder is allowed send the sensing measurement setup termination frame.

Optionally, in the TB conventional scenarios, the target radio frame may be a sensing measurement setup request frame. The AP indicates whether the sensing responder is allowed to send the sensing measurement setup termination frame through the sensing measurement setup request frame. In the SBP scenarios, the target radio frame may be an SBP response frame. The AP indicates whether the sensing responder is allowed to send the sensing measurement setup termination frame through the response frame.

A communication method is provided according to the embodiments of the disclosure. Optionally, the method may be applied to a network device, such as a sensing responder. The sensing responder may be an AP or an STA. The method may includes:
receiving a target radio frame, in which the target radio frame includes a first identification bit, and the first identification bit indicates whether the sensing responder is allowed to send a sensing measurement setup termination frame.

In a case where the sensing responder is an SBP initiator, and the SBP initiator participates in sensing measurement,
the first indication bit indicates that the SBP initiator is not allowed to send the sensing measurement setup termination frame. Under normal circumstances, the SBP measurement termination procedure shall be completed after the SBP responder (AP) sends the last SBP report frame, or the SBP initiator or the SBP responder sends an SBP termination frame. In a case where the sensing responder is not an SBP initiator, and the sensing measurement procedure corresponding to the target radio frame is a SBP sensing measurement, the first identification bit indicates that the sensing responder is not allowed to send the sensing measurement setup termination frame, to avoid causing an abnormal SBP termination procedure when the SBP measurement termination is triggered by the sent sensing measurement setup termination frame. Thus, in the SBP sensing measurement scenario, if the SBP initiator participates in the SBP sensing measurement, it can only send the SBP termination frame to terminate the SBP procedure, and is not allowed to send the sensing measurement setup termination frame to trigger the SBP termination procedure.

In the embodiments of the disclosure, the target radio frame is received. The target radio frame includes the first identification bit, and the first identification bit indicates whether the sensing responder is allowed to send the sensing measurement setup termination frame. Whether the sensing responder is allowed to send the sensing measurement setup termination frame is indicated by the target radio frame for the purpose of standardizing the behavior of the sensing responder.

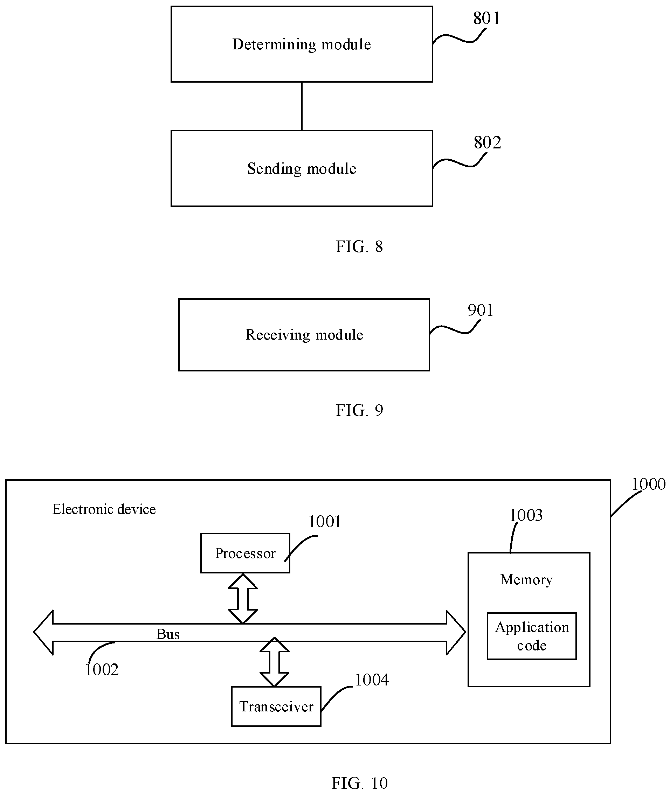

As illustrated in FIG. 8, based on the same principle as the method provided in the embodiment of the disclosure, an electronic device is further provided according to the embodiments of the disclosure. The electronic device may be an AP. The electronic device includes:
a determining module 801, configured to determine a target radio frame, in which the target radio frame includes a first identification bit, and the first identification bit indicates whether a sensing responder is allowed to send a sensing measurement setup termination frame; and
a sending module 802, configured to send the target radio frame.

Optionally, in the embodiment of the disclosure, the first identification bit includes a MSID;
if a parameter value of the first identification bit is within a first value range, the first identification bit indicates that the sensing responder is allowed to send the sensing measurement setup termination frame; or
if a parameter value of the first identification bit being within a second value range, the first identification bit indicates that the sensing responder is not allowed to send the sensing measurement setup termination frame.

Optionally, in the embodiment of the disclosure, if a parameter value of the first identification bit is equal to a first parameter value, the first identification bit indicates that the sensing responder is allowed to send the sensing measurement setup termination frame; or
if a parameter value of the first identification bit is equal to a second parameter value, the first identification bit indicates that the sensing responder is not allowed to send the sensing measurement setup termination frame.

Optionally, in the embodiment of the disclosure, in a case of the sensing responder being an SBP initiator, the first identification bit indicates that the sensing responder is allowed to send the sensing measurement setup termination frame;
in a case of the sensing responder being not an SBP initiator and a sensing measurement corresponding to the target radio frame being an SBP sensing measurement, the first identification bit indicates that the sensing responder is not allowed to send the sensing measurement setup termination frame;
   or
in a case of the sensing responder being not an SBP initiator and a sensing measurement corresponding to the target radio frame being not an SBP sensing measurement, the first identification bit indicates that the sensing responder is allowed to send the sensing measurement setup termination frame.

Optionally, in the embodiment of the disclosure, in the case of the sensing responder being an SBP initiator, the target radio frame includes an SBP response frame; and
in the case of the sensing responder being not an SBP initiator, the target radio frame includes a sensing measurement setup request frame.

In the embodiment of the disclosure, the determining module 801 determines the target radio frame, in which the target radio frame includes the first identification bit, and the first identification bit indicates whether the sensing responder is allowed to send the sensing measurement setup termination frame. The sending module 802 sends the target radio frame. The target radio frame indicates whether the sensing responder is allowed to send the sensing measurement setup termination frame for the purpose of standardizing the behavior of the sensing responder.

A communication apparatus, which is applied to an AP, is further provided according to the embodiments of disclosure. The apparatus includes:
a radio frame determining module, configured to determine a target radio frame, in which the target radio frame includes a first identification bit, and the first identification bit indicates whether a sensing responder is allowed to send a sensing measurement setup termination frame; and
a radio frame sending module, configured to send the target radio frame.

The apparatus also includes other modules of the electronic device in the aforementioned embodiments, which will not be described in detail here.

As illustrated in FIG. 9, based on the same principle as the method provided in the embodiment of the disclosure, an electronic device is further provided according to the disclosure. The electronic device may be an AP. The electronic device includes:
a receiving module 901, configured to receive a target radio frame, in which the target radio frame includes a first identification bit, and the first identification bit indicates whether the sensing responder is allowed to send a sensing measurement setup termination frame.

Optionally, in the embodiment of the disclosure, if the sensing responder is an SBP initiator, and the SBP initiator participates in sensing measurement,
the first identification bit indicates that the SBP initiator is not allowed to send the sensing measurement setup termination frame.

In the embodiment of the disclosure, the receiving module 901 receives the target radio frame. The target radio frame includes the first identification bit, and the first identification bit indicates whether the sensing responder is allowed to send the sensing measurement setup termination frame. The target radio frame indicates whether the sensing responder is allowed to send the sensing measurement setup termination frame for the purpose of standardizing the behavior of the sensing responder.

A communication apparatus, which is applied to an AP, is further provided according to the embodiments of disclosure. The apparatus includes:
a radio frame receiving module, configured to receive a target radio frame, in which the target radio frame includes a first identification bit, and the first identification bit indicates whether a sensing responder is allowed to send a sensing measurement setup termination frame.

The apparatus also includes other modules of the electronic device in the aforementioned embodiments, which will not be described in detail here.

In an optional embodiment, an electronic device is further provided according to the embodiments of disclosure. As illustrated in FIG. 10, the electronic device 1000 shown in FIG. 10 may be a server. The electronic device 1000 includes a processor 1001 and a memory 1003. The processor 1001 is connected to the memory 1003, for example, via a bus 1002. Optionally, the electronic device 1000 may also include a transceiver 1004. It should be noted that there may be one or more transceivers 1004 in practical applications, and the structure of the electronic device 1000 does not constitute a limitation of the embodiments of the disclosure.

The processor 1001 may be a central processing unit (CPU), a general-purpose processor, a digital signal processor (DSP), an application specific integrated circuit (ASIC), a field programmable gate array (FPGA) or other programmable logic devices, transistor logic devices, hardware components, or any combination thereof. The processor 1001 may implement or execute various exemplary logic boxes, modules, and circuits described in combination with the description disclosed in the disclosure. The processor 1001 may also be a combination that implements a computing function, for example, a combination consisting of one or more microprocessors, or a combination consisting of DSPs and microprocessors.

The bus 8002 may include a pathway to transfer information among the above components. The bus 1002 may be a peripheral component interconnect (PCI) bus or an extended industry standard architecture (EISA) bus. The bus 1002 can be categorized as an address bus, a data bus, a control bus, and the like. For ease of representation, the bus 1002 is represented by only one thick line in FIG. 10, but it does not indicate that there is only one bus or one type of bus.

The memory 1003 may be a read only memory (ROM) or other types of static storage devices for storing static information and instructions, a random access memory (RAM) or other types of dynamic storage devices for storing information and instructions, an electrically erasable programmable ROM (EEPROM), a compact disc ROM (CD-ROM) or other optical disc memories, optical disk memories (including compact disc, laser disc, CD-ROM, digital general disc, and Blu-ray disc), disk storage mediums and other magnetic storage devices, or any other mediums that can be used to carry or store expected program codes in the form of instructions or data structures and can be accessed by a computer, which is not limited herein.

The memory 1003 is configured to store application codes for executing the solution of the disclosure, and the execution is controlled by the processor 1001. The processor 1001 is configured to execute the application codes stored in the memory 1003 to implement the contents shown in the foregoing method embodiments.

The electronic device includes but is not limited to: a mobile phone, a notebook computer, a digital broadcast receiver, a personal digital assistant (PDA), a PAD, a portable multimedia player (PMP), a vehicle-mounted terminal (e.g., vehicle-mounted navigation terminal) and other mobile terminals, and fixed terminals such as a digital TV and a desktop computer. The electronic device shown in FIG. 10 is only an example and should not impose any limitation on the functions and scope of use of the embodiments of the disclosure.

The server provided by the disclosure may be a standalone physical server, a server cluster comprising multiple physical servers or a distributed system, or a cloud server providing basic cloud computing services such as cloud services, cloud database, cloud computing, cloud functions, cloud storage, network services, cloud communication, middleware services, domain name services, security services, content distribution network (CDN), big data and artificial intelligence platforms. The terminal may include, but is not limited to, a smartphone, a tablet, a laptop, a desktop computer, a smart speaker, and a smart watch. The terminal and the server may be connected directly or indirectly in a wired or wireless manner, which is not limited herein.

The embodiments of the disclosure provide a computer-readable storage medium having computer programs stored thereon. When the computer programs are executed by a computer, the computer is caused to execute the corresponding contents of the foregoing method embodiments.

It should be understood that although various steps in the flowcharts of the accompanying drawings are shown in sequence as indicated by arrows, these steps are not necessarily performed in the order indicated by the arrows. Unless explicitly stated in this article, the execution of these steps is not strictly limited in order, and they can be performed in any other order. Moreover, at least some of the steps in the flowchart of the accompanying drawings may include multiple sub-steps or multiple stages. These sub-steps or stages are not necessarily executed at the same time, but may be executed at different times, and the order of the execution is not necessarily sequential, but may be executed in turn or alternately with other steps or at least a portion of sub-steps or stages of other steps.

It is noted that the computer-readable medium described above in the disclosure may be a computer-readable signal medium, a computer-readable storage medium or any combination thereof. The computer-readable storage medium may include, but is not limited to, an electrical, magnetic, optical, electromagnetic, infrared, or semiconducting system, apparatus or device, or any combination thereof. More specific examples of the computer-readable storage medium may include, but are not limited to, electrical connections having one or more wires, portable computer disks, hard disks, RAMs, ROMs, erasable programmable ROMs (EPROMs or flash memories), optical fibers, portable CD-ROMs, optical storage devices, magnetic memory devices, or any suitable combination thereof. In the disclosure, the computer-readable storage medium may be any tangible medium containing or storing programs that may be used by or in combination with an instruction execution system, apparatus or device. In the disclosure, a computer-readable signal medium may include a data signal propagated in a baseband or as part of a carrier that carries computer-readable program codes. The propagated data signal may take a variety of forms, which includes, but is not limited to, an electromagnetic signal, an optical signal, or any suitable combination thereof. The computer-readable signal medium may also be any computer-readable medium other than the computer-readable storage medium. The computer-readable signal medium may send, propagate, or transmit a program that can be used by or in combination with an instruction execution system, apparatus, or device. The program code stored on the computer-readable medium may be transmitted using any suitable medium, which includes, but is not limited to: wire, fiber optic cable, Radio Frequency (RF), or any suitable combination thereof.

The above computer-readable medium may be contained in the above electronic device or exist independently rather than being assembled into the electronic device.

The computer-readable medium carries one or more programs. When the one or more programs are executed by the electronic device, the electronic device is caused to implement the method shown in the above embodiments.

According to an aspect of the disclosure, a computer program product or computer program is provided. The computer program product or computer program includes computer instructions stored in a computer-readable storage medium. The processor of the computer device reads the computer instructions from the computer-readable storage medium, and the processor executes the computer instructions to cause the computer device to implement the communication method provided in the above optional implementations.

The computer program codes for performing the operations of the disclosure may be written in one or more programming languages or combinations thereof. The above programming languages include object-oriented programming languages, such as Java, Smalltalk, and C++, and conventional procedural programming languages, such as "C" programming language or similar programming languages. The program code may be executed entirely on a user computer, executed partially on the user computer, executed as a stand-alone software package, executed partially on the user computer and partially on a remote computer, or executed entirely on a remote computer or a server. In the case involving the remote computer, the remote computer may be connected to the user computer via any type of network, including a LAN or a Wide Area Network (WAN), or it may be connected to an external computer (e.g., via the Internet through an Internet service provider).

The flowcharts and block diagrams in the accompanying drawings illustrate optional architectures, functions and operations that may be implemented by the systems, methods and computer program products according to the embodiments of the disclosure. At this point, each frame in the flowcharts or block diagrams may represent a module, a program segment, or a portion of codes, which includes one or more executable instructions for implementing a specified logical function. It should also be noted that in some implementations as replacements, the functions labeled in the frames may also be implemented in a different order than those labeled in the accompanying drawings. For example, two consecutively represented boxes may actually be executed substantially in parallel, or they may sometimes be executed in reverse order, depending on the function involved. It should also be noted that each of the frames in the block diagrams and/or flowcharts, and any combination of frames in the block diagrams and/or flowcharts, may be implemented with a specialized hardware-based system that performs the specified function or operation, or may be implemented with a combination of specialized hardware and computer instructions.

The modules described in the embodiments of the disclosure may be realized through software or hardware. The name of a module does not constitute a limitation of the module itself in a certain case. For example, module A may also be described as "module A for performing an operation B".

The above description is only preferred embodiments of the disclosure and an explanation of the technical principles utilized. It should be understood by those skilled in the art that the scope of disclosure involved in the disclosure is not limited to the technical solutions formed by a particular combination of the above technical features, but also covers other technical solutions formed by any combination of the above technical features or their equivalent features without departing from the above disclosed concept, for example, the technical solution formed by interchanging the above disclosed (but not limited to) technical features with similar functions in the disclosure.

## Claims

1. A communication method, applied to an access point (AP), comprising:
determining a target radio frame, wherein the target radio frame comprises a first identification bit, and the first identification bit indicates whether a sensing responder is allowed to send a sensing measurement setup termination frame; and
sending the target radio frame.

2. The method of claim 1, wherein the first identification bit comprises a measurement setup identification (MSID);
a parameter value of the first identification bit is within a first value range, and the first identification bit indicates that the sensing responder is allowed to send the sensing measurement setup termination frame; or
a parameter value of the first identification bit is within a second value range, and the first identification bit indicates that the sensing responder is not allowed to send the sensing measurement setup termination frame.

3. The method of claim 1, wherein
a parameter value of the first identification bit is equal to a first parameter value, and the first identification bit indicates that the sensing responder is allowed to send the sensing measurement setup termination frame; or
a parameter value of the first identification bit is equal to a second parameter value, and the first identification bit indicates that the sensing responder is not allowed to send the sensing measurement setup termination frame.

4. The method of claim 1, wherein in a case of the sensing responder being a sensing by proxy (SBP) initiator, the first identification bit indicates that the sensing responder is allowed to send the sensing measurement setup termination frame;
in a case of the sensing responder being not an SBP initiator and a sensing measurement corresponding to the target radio frame being an SBP sensing measurement, the first identification bit indicates that the sensing responder is not allowed to send the sensing measurement setup termination frame;
or,
in a case of the sensing responder being not an SBP initiator and a sensing measurement corresponding to the target radio frame being not an SBP sensing measurement, the first identification bit indicates that the sensing responder is allowed to send the sensing measurement setup termination frame.

5. The method of claim 2 or 3, wherein in the case of the sensing responder being an SBP initiator, the target radio frame comprises an SBP response frame; and
in a case of the sensing responder being not an SBP initiator, the target radio frame comprises a sensing measurement setup request frame.

6. A communication method, applied to a sensing responder, comprising:
receiving a target radio frame, wherein the target radio frame comprises a first identification bit, and the first identification bit indicates whether the sensing responder is allowed to send a sensing measurement setup termination frame.

7. The method of claim 6, wherein in a case of the sensing responder being a sensing by proxy (SBP) initiator that participates in sensing measurement,
the first identification bit indicates that the SBP initiator is not allowed to send the sensing measurement setup termination frame.

8. An electronic device, being an access point (AP), and comprising:
a determining module, configured to determine a target radio frame, wherein the target radio frame comprises a first identification bit, and the first identification bit indicates whether a sensing responder is allowed to send a sensing measurement setup termination frame; and
a sending module, configured to send the target radio frame.

9. An electronic device, being a sensing responder, and comprising:
a receiving module, configured to receive a target radio frame, wherein the target radio frame comprises a first identification bit, and the first identification bit indicates whether the sensing responder is allowed to send a sensing measurement setup termination frame.

10. An electronic device, comprising: a memory, a processor and a computer program stored in the memory and executable by the processor, wherein when the program is executed by the processor, the method of any one of claims 1-5 or the method of any one of claims 6-7 is implemented.

11. A computer-readable storage medium having a computer program stored thereon, wherein when the program is executed by a processor, the method of any one of claims 1-5 or the method of any one of claims 6-7 is implemented.
